# EUROPEAN PATENT SPECIFICATION

(11) **EP 3 795 607 B1**
(45) Date of publication and mention of the grant of the patent: **22.06.2022**
(21) Application number: 20779374.6
(22) Date of filing: 17.03.2020
(51) Int. Cl.: C08G 63/08, C08G 63/685, C08G 63/82, C08G 63/85

(54) **TRIBLOCK COPOLYMER AND PREPARATION METHOD THEREFOR**
DREIBLOCK-COPOLYMER UND HERSTELLUNGSVERFAHREN DAFÜR
COPOLYMÈRE TRIBLOC ET SON PROCÉDÉ DE PRÉPARATION

(30) Priority: 26.03.2019 KR 20190034614; 16.03.2020 KR 20200031969
(43) Date of publication of application: 24.03.2021
(73) Proprietor: LG CHEM, LTD., Yeongdeungpo-gu, Seoul 07336 (KR)
(72) Inventor: CHOI, Jung Yun, Daejeon 34122 (KR); HEO, Sungwoon, Daejeon 34122 (KR); KIM, Chul Woong, Daejeon 34122 (KR)
(74) Representative: Goddar, Heinz J.
(86) International application number: PCT/KR2020/003639
(87) International publication number: WO 2020/197148

(56) References cited:
- CN-A- 1 927 911
- JP-B2- 5 584 803
- KR-A- 20090 090 695
- KR-A- 20130 034 997
- KR-A- 20150 063 367
- KR-A- 20180 072 481
- KR-B1- 101 318 734
- HANS R KRICHELDORF ET AL: "Stereocomplexes of A-B-A Triblock Copolymers Based on Poly(l-Lactide) and Poly(d-Lactide) A Blocks", MACROMOLECULES, AMERICAN CHEMICAL SOCIETY, WASHINGTON DC UNITED STATES, vol. 38, no. 16, 9 August 2005 (2005-08-09), pages 7018-7025, XP008166599, ISSN: 0024-9297, DOI: 10.1021/MA047836X [retrieved on 2005-07-13]
- JULIEN RAMIER ET AL: "Microwave-Assisted Synthesis and Characterization of Biodegradable Block Copolyesters Based on Poly(3-hydroxyalkanoate)s and Poly(D,L-lactide", JOURNAL OF POLYMER SCIENCE PART A: POLYMER CHEMISTRY, vol. 50, no. 7, 1 April 2012 (2012-04-01), pages 1445-1455, XP055743447, US ISSN: 0887-624X, DOI: 10.1002/pola.25916

## Description

### [TECHNICAL FIELD]

### CROSS-REFERENCE TO RELATED APPLICATION(S)

This application claims the benefit of Korean Patent Application No. 10-2019-0034614 filed on March 26, 2019 and Korean Patent Application No. 10-2020-0031969 filed on March 16, 2020 with the Korean Intellectual Property Office.

The present disclosure relates to a triblock copolymer and a method for preparing the same.

### [BACKGROUND ART]

Polylactide (or polylactic acid) resin is a plant-derived resin obtained from plants such as corn, and is attracting attention as an environment-friendly material having excellent tensile strength and elastic modulus while having biodegradable properties. Specifically, unlike petroleum-based resins such as polystyrene resin, polyvinyl chloride (PVC) resin, and polyethylene that have been used in the past, polylactide (or polylactic acid) resin has the effects of preventing the depletion of petroleum resources and suppressing carbon dioxide emissions, so it can reduce environmental pollution, which is a drawback of petroleum-based plastic products. Therefore, as the problem of environmental pollution caused by waste plastic, etc. has emerged as a social problem, it has been attempted to expand the scope of application to the fields of the products where general plastics (petroleum-based resins) were used, such as food packaging materials and containers, and electronic product cases.

However, the polylactide resin has a lower impact resistance and heat resistance than conventional petroleum-based resins, and thus its application range is limited. Further, the polylactide resin has poor elongation characteristics and easily exhibits brittleness, which has a limitation as a general-purpose resin.

Therefore, in the existing technology, research is underway to improve physical properties by compounding materials such as PBS (poly(butylene succinate)) and PBAT (poly(butylene adipate-coterephthalate)), which are biodegradable and have relatively excellent elongation characteristics, with polylactide, or by forming block copolymers. However, in the case of PBS and PBAT, there is a problem that the tensile strength is low, and the tensile strength of the compound or block copolymer is also lowered.

In addition, there have been attempts to form a copolymer of biodegradable polyhydroxyalkanoate (PHA) and a polylactic acid in the related art, there is a problem that crystallinity is not maintained, and thus, the tensile strength is rather reduced.

Triblock A-B-A copolymers prepared by a Sn(Il) 2-ethylhexanoate catalyzed chain extension of various telechelic soft segments, with L,L-lactide (LLA) are described by H.R Kricheldorf in Macromolecules (vol. 38, no. 16, 9 August 2005, pages 7018-7025).

### [DETAILED DESCRIPTION OF THE INVENTION]

### [Technical Problem]

It is one object of the present disclosure to provide a triblock copolymer excellent in mechanical properties such as tensile modulus, tensile strength, elongation at break and impact strength while maintaining environmental friendliness and biodegradability, and a method for preparing the same.

### [Technical Solution]

Provided herein is a triblock copolymer comprising: a poly(3-hydroxypropionate) block and a polylactide block bonded to both ends of the poly(3-hydroxypropionate) block, respectively.

Also provided herein is a method for preparing a triblock copolymer comprising subjecting a lactide monomer to a ring-opening polymerization in the presence of a poly(3-hydroxypropionate) initiator having hydroxy groups at both ends to prepare a triblock copolymer.

Hereinafter, a triblock copolymer and a method for preparing the same according to specific embodiments of the present disclosure will be described in more detail.

Unless particularly mentioned herein, the term "including" or "containing" refers to including any element (or component) without any limitation, and should not be construed as excluding addition of other elements (or components).

Also, throughout the present specification, the term "lactide monomer" can be defined as follows. Typically, lactides can be classified into L-lactide consisting of L-lactic acid, D-lactide consisting of D-lactic acid, and meso-lactide consisting of one L-type and one D-type. Also, a mixture of L-lactide and D-lactide in a weight ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and a higher crystallization degree than a polylactide having a low level of optical purity. However, the term "lactide monomer" is defined to include all types of lactides regardless of the difference in the characteristics of lactides depending on their types and the difference in the characteristics of the polylactides obtained therefrom.

And, throughout the present specification, the term "substituted or unsubstituted" means being unsubstituted or substituted with one or more substituents selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent to which two or more substituents of the above-exemplified substituents are connected. For example, "a substituent in which two or more substituents are connected" may be a biphenyl group. Namely, a biphenyl group may be an aryl group, or it may be interpreted as a substituent in which two phenyl groups are connected.

Further, throughout the present specification, the term "triblock copolymer" refers to a polylactide-poly(3-hydroxypropionate)-polylactide triblock copolymer containing a polylactide repeating unit and a poly(3-hydroxypropionate) repeating unit. In particular, the poly(3-hydroxypropionate) repeating unit has a specific linking group including an amide. Such polylactide-poly(3-hydroxypropionate)-polylactide triblock copolymer can be prepared by a process including forming the polylactide repeating unit and the poly(3-hydroxypropionate) repeating unit by the ring-opening polymerization of a "lactide monomer" in the presence of a poly(3-hydroxypropionate) initiator having hydroxy groups at both ends. The polymer obtained after the completion of such ring opening polymerization and the formation of the repeating unit can be referred to as the "triblock copolymer". In this case, as stated above, the category of the "lactide monomer" includes any types of lactides.

Further, in the category of the polymer that can be referred to as the "triblock copolymer", all the polymers may be included in any state after the completion of the ring opening polymerization and the formation of the repeating unit, for example, unpurified or purified polymers after the completion of the ring opening polymerization, the polymers contained in the liquid or solid resin composition prior to being molded into an article, or the polymers contained in plastics or woven materials after being molded into an article. Accordingly, throughout the present specification, the physical properties (weight average molecular weight, or the like) of the "triblock copolymer" can be defined by the physical properties of the polymer in any state after the completion of the ring opening polymerization and the formation of the repeating unit.

On the other hand, the present inventors have found that when a triblock copolymer including a specific poly(3-hydroxypropionate)block and a polylactide block bonded to both ends of the poly(3-hydroxypropionate)block, respectively, is excellent in mechanical properties such as tensile modulus, tensile strength, elongation at break and impact strength while maintaining environmental friendliness and biodegradability, and also, such a triblock copolymer can be prepared by a process including subjecting a lactide monomer to a ring-opening polymerization in the presence of a poly(3-hydroxypropionate) initiator having hydroxy groups at both ends, thereby completing the present disclosure.

According to one embodiment of the present disclosure, there is provided a triblock copolymer comprising: a poly(3-hydroxypropionate) block represented by the following Chemical Formula 1, and a polylactide block bonded to both ends of the poly(3-hydroxypropionate) block, respectively. 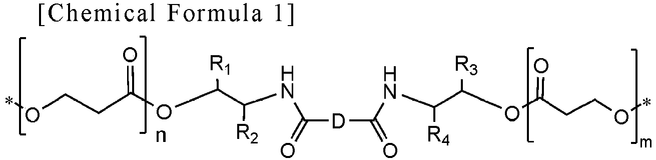 in the Chemical Formula 1,
D is a substituted or unsubstituted C₁₋₁₀ alkylene; a substituted or unsubstituted C₆₋₆₀ arylene; or a substituted or unsubstituted C₂₋₆₀ heteroarylene containing at least one heteroatom selected from the group consisting of O, N, Si and S,
R₁ to R₄ are each independently hydrogen; halogen; hydroxy; cyano; nitrile; nitro; amino; a substituted or unsubstituted C₁₋₆₀ alkyl; a substituted or unsubstituted C₁₋₆₀ haloalkyl; a substituted or unsubstituted C₁₋₆₀ thioalkyl; a substituted or unsubstituted C₁₋₆₀ alkoxy; a substituted or unsubstituted C₁₋₆₀ haloalkoxy; a substituted or unsubstituted C₃₋₆₀ cycloalkyl; a substituted or unsubstituted C₁₋₆₀ alkenyl; a substituted or unsubstituted C₆₋₆₀ aryl; a substituted or unsubstituted C₆₋₆₀ aryloxy; or a substituted or unsubstituted C₂₋₆₀ heteroaryl containing at least one of O, N, Si and S, and
n and m are each independently an integer of 1 to 10000.

The poly(3-hydroxypropionate) oligomer contained in the poly(3-hydroxypropionate) block has excellent mechanical properties and has a low glass transition temperature (Tg) of about -20°C, thereby exhibiting high elongation at break characteristics. Therefore, the triblock copolymer of the one embodiment has a structure in which due to the poly(3-hydroxypropionate) block represented by Chemical Formula 1 and the polylactide block chemically bonded to each of both ends thereof, it can solve the problem of elongation characteristics of conventional polylactide resins, and exhibit excellent mechanical properties such as tensile strength while having excellent biodegradability.

The triblock copolymer according to the one embodiment may include 0.01 to 100% by weight, 0.1 to 90% by weight, 0.5 to 80% by weight, or 0.7 to 70% by weight of the poly(3-hydroxypropionate) block represented by Chemical Formula 1.

The triblock copolymer according to the one embodiment may have a weight average molecular weight of 10,000 to 400,000, 15,000 to 350,000, 20,000 to 300,000, or 25,000 to 250,000.

As described above, in the case of the conventional polylactide resin, it has been in the spotlight due to its mechanical properties that are relatively excellent as a biodegradable resin, but due to its high tensile modulus value, that is, the brittleness of the resin itself, there was a limit to applying it to multiple products. On the other hand, since the polylactide-poly(3-hydroxypropionate)block copolymer according to the one embodiment exhibits excellent mechanical properties such as tensile strength and elongation while being excellent in flexibility, the brittleness problem of conventional polylactide resins can be solved and its application fields can be expanded.

According to another embodiment of the present disclosure, there is provided a method for preparing a triblock copolymer comprising subjecting a lactide monomer to a ring-opening polymerization in the presence of a poly(3-hydroxypropionate) initiator having hydroxy groups at both ends to prepare a triblock copolymer.

In general, the polymerization reaction of a polylactide resin by the ring-opening polymerization of a lactide monomer is initiated by a compound having a hydroxy group at the end, and is carried out by successively ring-opening and inserting a lactide monomer into the compound having a hydroxy group at the end.

Therefore, the poly(3-hydroxypropionate) initiator includes a hydroxy group at both ends. Thus, when the hydroxy group at both ends of the poly(3-hydroxypropionate) initiator is added to the ring-opening polymerization reaction of the lactide monomer, the lactide monomer starts to be inserted from the end, and as a result, a polylactide-poly(3-hydroxypropionate) block copolymer can be prepared.

Therefore, when the ring-opening polymerization reaction of the lactide monomer is performed in the presence of the poly(3-hydroxypropionate) initiator having hydroxy groups at both ends, the poly(3-hydroxypropionate) having hydroxy groups at both ends serves as a polymerization initiator and at the same time, is included as a repeating unit in the triblock copolymer, thus making it possible to improve mechanical properties such as flexibility and impact strength of the finally prepared block copolymer. As described above, since the poly(3-hydroxypropionate) is included in the finally prepared triblock copolymer, it is possible to lower the glass transition temperature (Tg) of the triblock copolymer and thus increase the flexibility, and further improve mechanical properties such as tensile modulus, tensile strength, elongation at break and impact strength.

In addition, since the initiator has a hydroxy group at both ends, it has an advantage that it is easy to improve the molecular weight of the block copolymer finally prepared by ring-opening polymerization, as compared with an initiator including a hydroxy group only at one end,

In the preparation method according to another embodiment, the poly(3-hydroxypropionate) initiator having hydroxy groups at both ends may be represented by the following Chemical Formula 2. 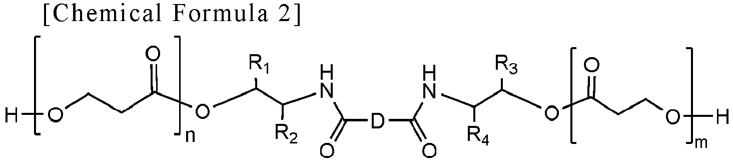 in the Chemical Formula 2, D, R₁ to R₄, n and m are the same as defined above, specifically, D may be a C₆₋₁₀ arylene.

Further, R₁ to R₄ may be hydrogen.

On the other hand, the dosage of the poly(3-hydroxypropionate) initiator having hydroxy groups at both ends may be selected within an appropriate range in consideration of the content of the repeating unit of the poly(3-hydroxypropionate) contained in the finally prepared triblock copolymer and the molar ratio of the hydroxy group of the initiator required to initiate the minimum polymerization. Specifically, in consideration of the minimum content for optimizing the flexibility and mechanical properties of the finally prepared triblock copolymer, and acting as an initiator of the ring-opening polymerization reaction, the poly(3-hydroxypropionate) initiator having hydroxy groups at both ends may be added in an amount of 0.1 to 100 parts by weight, 0.1 to 90 parts by weight, 0.5 to 80 parts by weight, or 0.7 to 70 parts by weight based on 100 parts by weight of the lactide monomer.

The poly(3-hydroxypropionate) initiator having hydroxy groups at both ends may have a weight average molecular weight of 5,000 to 50,000, 6,000 to 40,000, or 7,000 to 30,000 in order to exhibit excellent physical properties of the triblock copolymer without deteriorating polymerization activity. When the weight average molecular weight of the poly(3-hydroxypropionate) initiator having hydroxy groups at both ends is less than 5.000, the content of poly(3-hydroxypropionate) may be reduced, and when the weight average molecular weight exceeds 50,000, the polymerization activity may be reduced.

On the other hand, the preparation method according to the one embodiment may further include preparing the poly(3-hydroxypropionate) initiator having hydroxy groups at both ends before the ring-opening polymerization step.

Specifically, 3-hydroxypropionate can be subjected to condensation polymerization to prepare a poly(3-hydroxypropionate) oligomer. In this case, the poly(3-hydroxypropionate) oligomer may have a weight average molecular weight of 2,000 to 30,000, or 3,000 to 25,000.

Subsequently, the poly(3-hydroxypropionate) oligomer; one or more selected from the group consisting of bisoxazoline-based compounds and diol-based compounds may be reacted. Through this reaction, a poly(3-hydroxypropionate) initiator having hydroxy groups at both ends can be prepared.

The poly bisoxazoline-based compound may be represented by the following Chemical Formula 3. 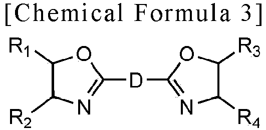 in the Chemical Formula 3, D, R₁ to R₄, n and m are the same as defined above, specifically, D may be a C₆₋₁₀ arylene.

Further, R₁ to R₄ may be hydrogen.

Further, the ratio of n and m may be 1:0.01 to 1:100.

The poly(3-hydroxypropionate) oligomer and the bisoxazoline-based compound can be reacted according to the following Reaction Scheme 1 to form a poly(3-hydroxypropionate) initiator having hydroxy groups at both ends, specifically, an initiator represented by Chemical Formula 2 can be prepared. 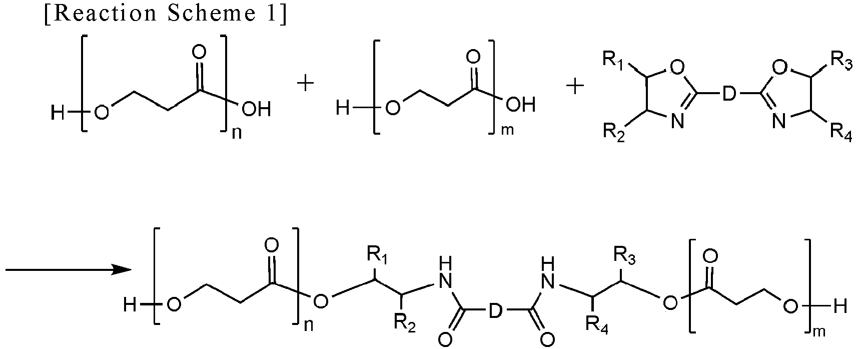 in the Reaction Scheme 1, D, R₁ to R₄, n and m are the same as defined above.

The reaction of Reaction Scheme 1 is performed by the ring-opening addition reactions of oxazoline, and this ring-opening addition reaction may proceed with the carboxylic acid of the poly(3-hydroxypropionate) oligomer. Specifically, the proton of the carboxylic acid interacts with the nitrogen atom of the oxazoline ring, whereby the electron-deficient oxazoline ring is susceptible to nucleophilic attack on the carbon next to the oxygen atom. The proton-released carboxylic acid may nucleophilically attack the carbon next to the oxygen atom to perform the ring opening addition reaction of the above-mentioned oxazoline.

Since the bisoxazoline-based compound undergoes a ring-opening addition reaction with the carboxylic acid of the poly(3-hydroxypropionate) oligomer in each oxazoline ring, finally, a poly(3-hydroxypropionate) initiator having hydroxy groups at both ends of Formula 2 may be prepared.

The bisoxazoline-based compound is not particularly limited as long as it is a compound having two oxazoline rings, and for example, it may be one or more selected from the group consisting of 1,4-phenylenebisoxazoline, 2,2'-bisoxazoline, N,N'-hexamethylenebis(2-carbamoyl-2-oxazoline), 2,2'-methylenebis(2-oxazoline), 2,2'-ethylenebis(2-oxazoline), 2,2'-propylenebis(2-oxazoline), 1,3-phenylenebis-(2-oxazoline), 1,4-phenylenebis(4-methyl-2-oxazoline), 1,4-phenylene-bis(4,4'-dimethyl-2-oxazoline), 1,4-phenylenebis (2-oxazoline), 2,2'-bis(4-phenyl-2-oxazoline) and 2,2'-bis(4-methyl-2-oxazoline).

On the other hand, the diol-based compound is not particularly limited as long as it is a compound containing two hydroxyl groups, and for example, it may be one or more selected from the group consisting of ethylene glycol, propylene glycol, 2-methylene 1,3-propnane diol, 1,4-butane diol, 1,5-pentane diol, 3-methylene 1,5-pentane diol and 1, 6-hexane diol.

After preparing a poly(3-hydroxypropionate) initiator having hydroxy groups at both ends, the reactant including the initiator and a lactide monomer is dried, and the dried reactant can be subjected to a ring-opening polymerization step to prepare a triblock copolymer.

As the catalyst used in the ring-opening polymerization, all catalysts generally used in the preparation of a polylactide resin by the ring-opening polymerization of a lactide monomer may be used. For example, the ring-opening polymerization may be performed in the presence of one or more catalysts selected from the group consisting of an organometallic complex catalyst and an organic catalyst.

The organometallic complex catalyst may be used without limitation in its composition, as long as it is generally used for preparing a polylactide resin by a ring-opening polymerization of a lactide monomer. For example, the organometallic complex catalyst may be a catalyst represented by the following Chemical Formula 4.

[Chemical Formula 4] MA¹ₚA²₂₋ₚ

in the Chemical Formula 4, M is Al, Mg, Zn, Ca, Sn, Fe, Y, Sm, Lu, Ti or Zr, p is an integer of 0 to 2, A¹ and A² are each independently an alkoxy or carboxyl group.

More specifically, the MA¹ₚA²₂₋ₚ may be tin (II) 2-ethylhexanoate (Sn(Oct)₂).

On the other hand, the organic catalyst can be used without limitation in its composition as long as it is generally used for preparing a polylactide resin by a ring-opening polymerization reaction of a lactide monomer. For example, the organic catalyst may be one or more selected from the group consisting of the following 1,5,7-triazobicyclo-[4,4,0]dec-5-ene (TBD), the following 1,8-diazabicyclo[5.4.0]undec-7-ene (DBU), the following 7-methyl-1,5,7-triazabicyclo[4.4.0]dec-5-ene (MTBD), the following 4-dimethylaminopyridine (DMAP), the following 4-(1-pyrrolidinyl)pyridine (PPY), imidazole, triazolium, thiourea, tertiary amine and creatinine.

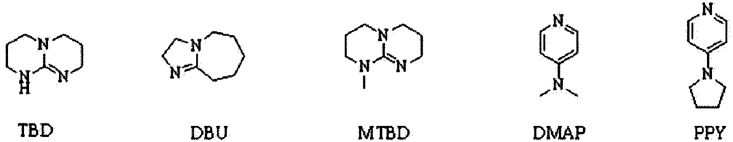

The imidazole may be one or more selected from the group consisting of the following compounds.

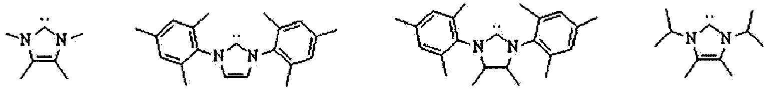

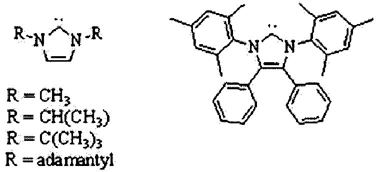

The triazolium may be the following compound.

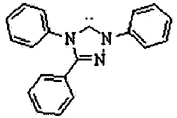

The thiourea may be one or more selected from the group consisting of the following compounds.

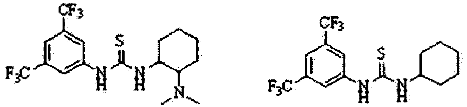

The tertiary amine may be one or more selected from the group consisting of the following compounds.

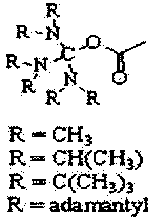

When the lactide ring-opening polymerization reaction proceeds in the presence of the above-mentioned catalyst, depolymerization or decomposition of the finally prepared triblock copolymer can be suppressed., and a triblock copolymer having a higher molecular weight and excellent mechanical properties can be obtained with a higher conversion rate.

In the method for preparing a triblock copolymer according to the other embodiment, the content of the catalyst may be 0.01 to 10 mol%, 0.05 to 8 mol%, 0.07 to 5 mol%, or 0.09 to 3 mol% based on 100 mol% of the lactide monomer. When the content of the catalyst relative to 100 mol% of the lactide monomer is less than 0.01 mol%, polymerization activity may not be sufficient, and when the content of the catalyst exceeds 10 mol%, the residual catalyst amount of the prepared triblock copolymer becomes larger, which may lead to decomposition or molecular weight reduction of the copolymer due to depolymerization such as transesterification reaction..

The ring-opening polymerization may be performed at 150 to 200°C for 5 to 10 hours.

Further, the ring-opening polymerization reaction can be performed by bulk polymerization using substantially no solvent. At this time, using substantially no solvent may cover the case of using a small amount of solvent for dissolving the catalyst, for example, up to the case of using less than 1 ml of solvent per 1 kg of lactide monomer used. As the ring-opening polymerization proceeds by bulk polymerization, it becomes possible to omit the process for removing the solvent after polymerization, and decomposition or loss of the resin in such a solvent removal process can also be suppressed. In addition, by the bulk polymerization, the triblock copolymer can be obtained with high conversion and yield.

### [ADVANTAGEOUS EFFECTS]

According to the present disclosure, a triblock copolymer having excellent mechanical properties such as tensile modulus, tensile strength, elongation at break and impact strength while maintaining environmental friendliness and biodegradability, and a method for preparing the same can be provided.

### [BRIEF DESCRIPTION OF THE DRAWINGS]

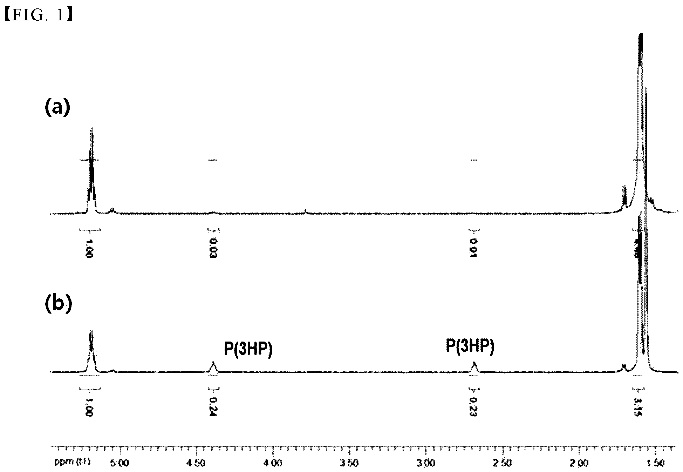

FIG. 1 (a) is a graph showing the results of NMR analysis of the polymer prepared in Comparative Example 1, and (b) is a graph showing the results of NMR analysis of the triblock copolymer prepared in Example 3.

### [DETAILED DESCRIPTION OF THE EMBODIMENTS]

Hereinafter, the present disclosure will be described in more detail by way of examples. However, the following examples are for illustrative purposes only, and the contents of the present disclosure are not limited thereby.

### Examples 1 to 4

### (1) Preparation of poly(3-hydroxypropionate) initiator having hydroxy groups at both ends

7 g (77.71 mmol) of 3-hydroxypropionate was dried, and then subjected to condensation polymerization in the presence of p-toluene sulfonic acid (p-TSA) catalyst at a temperature of 130°C for 24 hours to prepare a poly(3-hydroxypropionate) oligomer (weight average molecular weight of 4,150).

4 g (1.65 mmol) of the prepared poly(3-hydroxypropionate) oligomer and 0.28 g (1.32 mmol) of 1,4-phenylenebisoxazoline (1,4-PBO) were added to a 250 mL round flask, and reacted at 110°C for 30 minutes to prepare a poly(3-hydroxypropionate) initiator (weight average molecular weight of 10,100) having hydroxy groups at both ends represented by the following Chemical Formula 5.

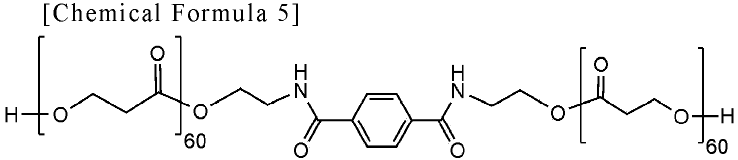

### (2) Preparation of triblock copolymer

To a 500 mL round flask, L-lactide, poly(3-hydroxypropionate) initiator having hydroxy groups at both ends represented by Chemical Formula 5, and tin(II) 2-ethylhexanoate were added in the amounts shown in Table 1 below, and vacuum-dried at room temperature for 4-5 hours by applying a vacuum sufficiently.

Subsequently, the flask was placed in an oil bath pre-heated at 130°C, the temperature of which was raised to 180°C, and then the ring-opening polymerization reaction was carried out for 20 minutes. After the reaction was completed, the reaction product was dissolved in chloroform and then extracted with methanol to recover the block copolymer.

**[Table 1]**

| (unit: g) | L-lactide | Tin(II) 2-ethylhexanoate | Initiator represented by Chemical Formula 5 |
|---|---|---|---|
| Example 1 | 16.00 | 0.02 | 0.16 |
| Example 2 | 16.00 | 0.02 | 0.80 |
| Example 3 | 16.00 | 0.02 | 1.60 |
| Example 4 | 16.00 | 0.02 | 0.32 |

### Comparative Examples 1 and 2

To a 500 mL round flask, L-lactide, dodecanol, and tin(II) 2-ethylhexanoate were added in the amounts shown in Table 2 below, and vacuum-dried at room temperature for 4-5 hours by applying a vacuum sufficiently.

Subsequently, the flask was placed in an oil bath pre-heated at 130°C, the temperature of which was raised to 180°C, and then a ring-opening polymerization reaction was carried out for 20 minutes. After the reaction was completed, the reaction product was dissolved in chloroform and then extracted with methanol to recover the polymer.

**[Table 2]**

| (unit: g) | L-lactide | Tin(II) 2-ethylhexanoate | Dodecanol |
|---|---|---|---|
| Comparative Example 1 | 16.00 | 0.04 | 0.01 |
| Comparative Example 2 | 16.00 | 0.04 | 0.02 |

### Evaluation

### 1.NMR(Nuclear Magnetic Resonance) Analysis

NMR analysis was performed at room temperature using an NMR spectrometer including a Varian Unity Inova (500 MHz) spectrometer having a triple resonant 5 mm probe. The block copolymers and polymers prepared in Examples 1 to 4 and Comparative Example 1, respectively, were diluted to a concentration of about 10 mg/ml and used as an analysis target material in a solvent for NMR measurement (CDCl₃), and chemical shifts are expressed in ppm.

FIG. 1 (a) is a graph showing the results of NMR analysis of the polymer prepared in Comparative Example 1, and (b) is a graph showing the results of NMR analysis of the triblock copolymer prepared in Example 3. On the other hand, according to FIG. 1, it was confirmed that the NMR analysis graph of the block copolymer of Example 3 shows a poly(3-hydroxypropionate) peak, unlike the NMR analysis graph of the polymer of Comparative Example 1.

In addition, the integration ratio of the poly(3-hydroxypropionate) peak was calculated from the graphs of the NMR analysis results of Examples 1 to 4, which is shown in the "content of poly(3-hydroxypropionate) analyzed by NMR" in Table 3 below.

**[Table 3]**

| | Example 1 | Example 2 | Example 3 | Example 4 |
|---|---|---|---|---|
| Content of initiator represented by Chemical Formula 5 actually used | 0.160 g | 0.800 g | 1.600 g | 0.480 g |
| Content of poly(3-hydroxypropionate) analyzed by NMR | 0.224 g | 1.120 g | 1.760 g | 0.752 g |

According to Table 3, Examples 1, 2 and 4 also showed a poly(3-hydroxypropionate) peak in NMR analysis, as in Example 3. In particular, it can be predicted that the initiator used in the method for preparing the block copolymer of Examples 1 to 4 was mostly used as the reactant.

### 2. GPC (Gel Permeation Chromatography) analysis

The weight average molecular weight (Mw) and number average molecular weight (Mn) of the block copolymers of Examples 1 to 4 and the polymers of Comparative Examples 1 and 2 were determined by gel permeation chromatography (GPC) (Waters: Waters707). The block copolymer/polymer to be measured was dissolved in chloroform to a concentration of 4000 ppm, and 100 µl was injected into GPC. Chloroform was used as the mobile phase of GPC, the flow rate was 1.0 mL/min, and the analysis was performed at 35°C. The column connected four Waters HR-05,1,2,4E in series. RI and PAD Detector was used as the detector, and the measurement was performed at 35°C.

**[Table 4]**

| | Mn_{theoric} | Number average molecular weight (Mn) | Weight average molecular weight (Mw) | Polydispersity Index (PDI) |
|---|---|---|---|---|
| Example 1 | 163,474 | 90,200 | 123,000 | 1.36 |
| Example 2 | 33,991 | 59,100 | 82,300 | 1.39 |
| Example 3 | 17,805 | 48,700 | 63,100 | 1.30 |
| Example 4 | 55,763 | 86,300 | 131,000 | 1.52 |
| Comparativ e Example 1 | 288,186 | 91,731 | 180,524 | 1.97 |
| Comparativ e Example 2 | 144,186 | 55,984 | 115,050 | 2.06 |

- Mn_{theorical}: Theoretical number average molecular weight calculated using the molar ratio of the initiator added - polydispersity index (PDI) calculated by dividing the measured weight average molecular weight by the number average molecular weight.

According to Table 4, it was confirmed that dodecanol was used as an initiator in Comparative Examples 1 and 2, and that as the content of dodecanol increased, the number average molecular weight and the weight average molecular weight of the polymer decreased. Similarly, it was confirmed that in Examples 1 to 4, as the content of poly(3-hydroxypropionate) disclosed in Table 1 increased, the number average molecular weight and weight average molecular weight of the block copolymer decreased, so that poly (3-hydroxypropionate) acts as an initiator.

### 3. Measurement of tensile elongation

The polymers obtained in Examples 2, 4 and Comparative Example 1 were used, and Hot-press (Limotem QM900S) device was used to prepare a dogbone shaped test specimen corresponding to ASTM D638 Type V at 170°C. The tensile elongation of the film was measured according to the measurement method of IPC-TM-650 using a tensile strength meter (manufacturer: Instron, model name: 3345 UTM) for the prepared test specimen.

**[Table 5]**

| | Example 1 | Example 2 | Comparative Example 1 |
|---|---|---|---|
| Tensile elongation (%) | 80 | 13.5 | 2.5 |

According to Table 5, it was confirmed that the copolymers of Examples 1 and 4, in which L-lactide was subjected to a ring-opening polymerization in the presence of a poly(3-hydroxypropionate) initiator, exhibited a remarkably higher tensile elongation than Comparative Example 1, in which L-lactide was subjected to a ring opening polymerization in the presence of dodecanol.

## Claims

1. A triblock copolymer comprising: a poly(3-hydroxypropionate) block represented by the following Chemical Formula 1, and a polylactide block bonded to both ends of the poly(3-hydroxypropionate) block, respectively. 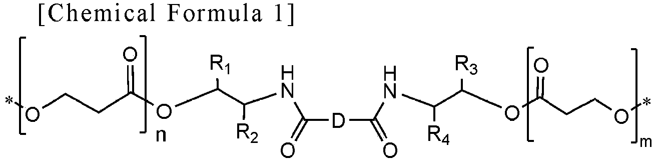 in the Chemical Formula 1,
D is a substituted or unsubstituted C₁₋₁₀ alkylene; a substituted or unsubstituted C₆₋₆₀ arylene; or a substituted or unsubstituted C₂₋₆₀ heteroarylene containing at least one heteroatom selected from the group consisting of O, N, Si and S,
R₁ to R₄ are each independently hydrogen; halogen; hydroxy; cyano; nitrile; nitro; amino; a substituted or unsubstituted C₁₋₆₀ alkyl; a substituted or unsubstituted C₁₋₆₀ haloalkyl; a substituted or unsubstituted C₁₋₆₀ thioalkyl; a substituted or unsubstituted C₁₋₆₀ alkoxy; a substituted or unsubstituted C₁₋₆₀ haloalkoxy; a substituted or unsubstituted C₃₋₆₀ cycloalkyl; a substituted or unsubstituted C₁₋₆₀ alkenyl; a substituted or unsubstituted C₆₋₆₀ aryl; a substituted or unsubstituted C₆₋₆₀ aryloxy; or a substituted or unsubstituted C₂₋₆₀ heteroaryl containing at least one of O, N, Si and S, and
n and m are each independently an integer of 1 to 10000.

2. The triblock copolymer according to claim 1, wherein,
the triblock copolymer comprises 0.01 to 100% by weight of the poly(3-hydroxypropionate) block represented by Chemical Formula 1.

3. The triblock copolymer according to claim 1, wherein,
the triblock copolymer has a weight average molecular weight of 10,000 to 400,000 where the weight average molecular weight is measured by the method defined in the description.

4. A method for preparing a triblock copolymer comprising subjecting a lactide monomer to a ring-opening polymerization in the presence of a poly(3-hydroxypropionate) initiator having hydroxy groups at both ends represented by the following Chemical Formula 2 to prepare a triblock copolymer. 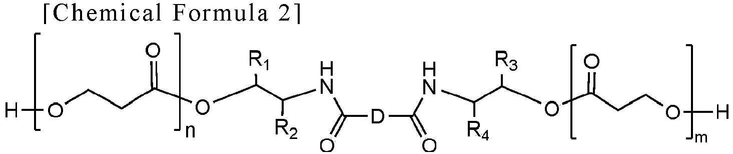 in the Chemical Formula 2,
D, R₁ to R₄, n and m are the same as defined in claim 1.

5. The method for preparing a triblock copolymer according to claim 4, wherein,
the poly(3-hydroxypropionate) initiator having hydroxy groups at both ends has a weight average molecular weight of 5,000 to 50,000 where the weight average molecular weight is measured by the method defined in the description.

6. The method for preparing a triblock copolymer according to claim 4, wherein,
a content the poly(3-hydroxypropionate) initiator having hydroxy groups at both ends is 0.01 to 100 parts by weight, based on 100 parts by weight of the lactide monomer.

7. The method for preparing a triblock copolymer according to claim 4, further comprising: subjecting 3-hydroxypropionate to condensation polymerization to prepare a poly(3-hydroxypropionate) oligomer; and
reacting the poly(3-hydroxypropionate) oligomer; one or more selected from the group consisting of bisoxazoline-based compounds and diol-based compounds to prepare a poly(3-hydroxypropionate) initiator having hydroxy groups at both ends.

8. The method for preparing a triblock copolymer according to claim 7, wherein,
the bisoxazoline-based compound is represented by the following Chemical Formula 3. 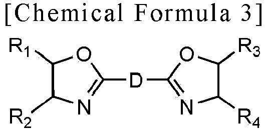 in the Chemical Formula 3,
D, R₁ to R₄, n and m are the same as defined in claim 1.

9. The method for preparing a triblock copolymer according to claim 4, wherein,
the ring-opening polymerization is performed in the presence of one or more catalysts selected from the group consisting of an organometallic complex catalyst and an organic catalyst.

10. The method for preparing a triblock copolymer according to claim 9, wherein,
the organometallic complex catalyst is a catalyst represented by the following Chemical Formula 4.
[Chemical Formula 4] MA¹ₚA²₂₋ₚ
in the Chemical Formula 4, M is Al, Mg, Zn, Ca, Sn, Fe, Y, Sm, Lu, Ti or Zr, p is an integer of 0 to 2, A¹ and A² are each independently an alkoxy or carboxyl group.

11. The method for preparing a triblock copolymer according to claim 10, wherein,
the MA¹ₚA²₂₋ₚ is tin (II) 2-ethylhexanoate (Sn(Oct)₂).

12. The method for preparing a triblock copolymer according to claim 9, wherein,
a content of the catalyst is 0.01 to 10 mol% based on 100 mol% of the lactide monomer.

13. The method for preparing a triblock copolymer according to claim 4, wherein,
the ring-opening polymerization is performed at 150 to 200°C for 5 to 10 hours.

14. The method for preparing a triblock copolymer according to claim 4, wherein,
the ring-opening polymerization reaction is performed by bulk polymerization.

## Patentansprüche

1. Triblockcopolymer, umfassend: einen durch die folgende chemische Formel 1 dargestellten Poly(3-hydroxypropionat)-Block und einen an beide Enden des Poly(3-hydroxypropionat)-Blocks gebundenen Polylactidblock: 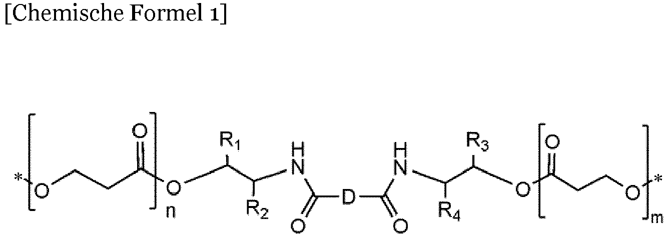 wobei in der chemischen Formel 1
D ein substituiertes oder unsubstituiertes C₁₋₁₀-Alkylen; ein substituiertes oder unsubstituiertes C₆₋₆₀-Arylen; oder ein substituiertes oder unsubstituiertes C₂₋₆₀-Heteroarylen enthaltend wenigstens ein Heteroatom ausgewählt aus der Gruppe bestehend aus O, N, Si und S ist,
R₁ bis R₄ jeweils unabhängig Wasserstoff; Halogen; Hydroxy; Cyano; Nitril; Nitro; Amino; ein substituiertes oder unsubstituiertes C₁₋₆₀-Alkyl; ein substituiertes oder unsubstituiertes C₁₋₆₀-Halogenalkyl; ein substituiertes oder unsubstituiertes C₁₋₆₀-Thioalkyl; ein substituiertes oder unsubstituiertes C₁₋₆₀-Alkoxy; ein substituiertes oder unsubstituiertes C₁₋₆₀-Halogenalkoxy; ein substituiertes oder unsubstituiertes C₃₋₆₀-Cycloalkyl; ein substituiertes oder unsubstituiertes C₁₋₆₀-Alkenyl; ein substituiertes oder unsubstituiertes C₆₋₆₀-Aryl; ein substituiertes oder unsubstituiertes C₆₋₆₀-Aryloxy; oder ein substituiertes oder unsubstituiertes C₂₋₆₀-Heteroaryl enthaltend wenigstens eines von O, N, Si und S sind, und
n und m jeweils unabhängig eine ganze Zahl von 1 bis 10.000 sind.

2. Triblockcopolymer nach Anspruch 1, wobei das Triblockcopolymer 0,01 bis 100 Gew.-% des durch chemische Formel 1 dargestellten Poly(3-hydroxypropionat)-Blocks umfasst.

3. Triblockcopolymer mach Anspruch 1, wobei das Triblockcopolymer ein Gewichtsmittelmolekulargewicht von 10.000 bis 400.000 aufweist, wobei das Gewichtsmittelmolekulargewicht durch das in der Beschreibung definierte Verfahren gemessen wird.

4. Verfahren zum Herstellen eines Triblockcopolymers umfassend Unterziehen eines Lactidmonomers einer Ringöffnungspolymerisation in der Gegenwart eines Poly(3-hydroxypropionat)-Initiators mit Hydroxygruppen an beiden Enden, dargestellt durch die folgende chemische Formel 2, um ein Triblockcopolymer herzustellen: 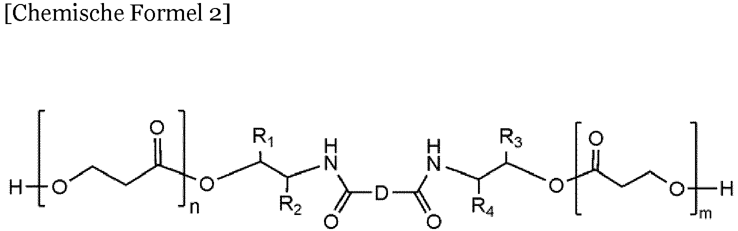 wobei in der chemischen Formel 2 D, R₁ bis R₄, n und m die gleichen sind wie in Anspruch 1 definiert.

5. Verfahren zum Herstellen eines Triblockcopolymers nach Anspruch 4, wobei der Poly(3-hydroxypropionat)-Initiator mit Hydroxygruppen an beiden Enden ein Gewichtsmittelmolekulargewicht von 5.000 bis 50.000 aufweist, wobei das Gewichtsmittelmolekulargewicht durch das in der Beschreibung definierte Verfahren gemessen wird.

6. Verfahren zum Herstellen eines Triblockcopolymers nach Anspruch 4, wobei ein Gehalt des Poly(3-hydroxypropionat)-Initiators mit Hydroxygruppen an beiden Enden 0,01 bis 100 Gewichtsteile, basierend auf 100 Gewichtsteilen des Lactidmonomers, ist.

7. Verfahren zum Herstellen eines Triblockcopolymers nach Anspruch 4, weiter umfassend: Unterziehen von 3-Hydroxypropionat einer Kondensationspolymerisation, um ein Poly(3-hydroxypropionat)-Oligomer herzustellen; und
Umsetzen des Poly(3-hydroxypropionat)-Oligomers; eines oder mehreren ausgewählt aus der Gruppe bestehend aus Verbindungen auf Basis von Bisoxazolin und Verbindungen auf Diolbasis, um einen Poly(3-hydroxypropionat)-Initiator mit Hydroxygruppen an beiden Enden herzustellen.

8. Verfahren zum Herstellen eines Triblockcopolymers nach Anspruch 7, wobei die Verbindung auf Bisoxazolinbasis durch die folgende chemische Formel 3 dargestellt wird: 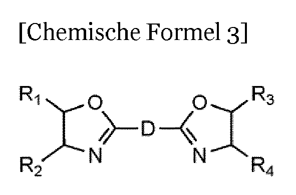 wobei in der chemischen Formel 3
wobei D, R₁ bis R₄, n und m die gleichen sind wie in Anspruch 1 definiert.

9. Verfahren zum Herstellen eines Triblockcopolymers nach Anspruch 4, wobei die Ringöffnungspolymerisation in der Gegenwart eines oder mehrerer Katalysatoren durchgeführt wird, die ausgewählt sind aus der Gruppe bestehend aus einem organometallischen Komplexkatalysator und einem organischen Katalysator.

10. Verfahren zum Herstellen eines Triblockcopolymers nach Anspruch 9, wobei der organometallische Komplexkatalysator durch die folgende chemische Formel 4 dargestellt wird:
[Chemische Formel 4] MA¹⁺ₚA²₂₋ₚ
wobei in der chemischen Formel 4 M Al, Mg, Zn, Ca, Sn, Fe, Y, Sm, Lu, Ti oder Zr ist, p eine ganze Zahl von 0 bis 2 ist, A¹ und A² jeweils unabhängig eine Alkoxy- oder Carboxylgruppe sind.

11. Verfahren zum Herstellen eines Triblockcopolymers nach Anspruch 10, wobei das MA¹ₚA²₂₋ₚ Zinn(II)-2-ethylhexanoat (Sn(Oct)₂) ist.

12. Verfahren zum Herstellen eines Triblockcopolymers nach Anspruch 9, wobei ein Gehalt des Katalysators 0,01 bis 10 mol% ist, basierend auf 100 mol% des Lactidmonomers.

13. Verfahren zum Herstellen eines Triblockcopolymers nach Anspruch 4, wobei die Ringöffnungspolymerisation bei 150 bis 200°C für 5 bis 10 Stunden durchgeführt wird.

14. Verfahren zum Herstellen eines Triblockcopolymers nach Anspruch 4, wobei die Ringöffnungspolymerisationsreaktion durch Massepolymerisation durchgeführt wird.

## Revendications

1. Copolymère tribloc comprenant : un bloc de poly(3-hydroxypropionate) représenté par la Formule chimique 1 ci-après, et un bloc de polylactide lié aux deux extrémités du bloc de poly(3-hydroxypropionate), respectivement. 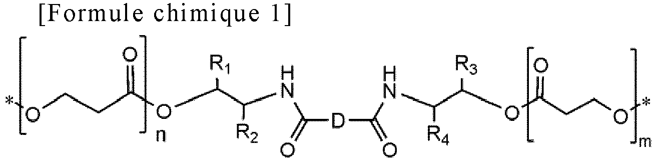 dans la Formule chimique 1,
D est un alkylène en C₁₋₁₀ substitué ou non substitué ; un arylène en C₆₋₆₀ substitué ou non substitué ; ou un hétéroarylène en C₂₋₆₀ substitué ou non substitué contenant un ou plusieurs hétéroatomes sélectionnés dans le groupe constitué de O, N, Si et S,
R₁ à R₄ sont chacun indépendamment un hydrogène ; un halogène ; un hydroxy ; un cyano ; un nitrile ; un nitro ; un amino ; un alkyle en C₁₋₆₀ substitué ou non substitué ; un haloalkyle en C₁₋₆₀ substitué ou non substitué ; un thioalkyle en C₁₋₆₀ substitué ou non substitué ; un alkoxy en C₁₋₆₀ substitué ou non substitué ; un haloalkoxy en C₁₋₆₀ substitué ou non substitué ; un cycloalkyle en C₃₋₆₀ substitué ou non substitué ; un alkényle en C₁₋₆₀ substitué ou non substitué ; un aryle en C₆₋₆₀ substitué ou non substitué ; un C₆₋₆₀ aryloxy substitué ou non substitué ; ou un hétéroaryle en C₂₋₆₀ substitué ou non substitué contenant au moins un élément parmi O, N, Si et S, et
n et m sont chacun indépendamment un nombre entier de 1 à 10 000.

2. Copolymère tribloc selon la revendication 1, dans lequel
le copolymère tribloc comprend entre 0,01 et 100 % en poids du bloc de poly(3-hydroxypropionate) représenté par la Formule chimique 1.

3. Copolymère tribloc selon la revendication 1, dans lequel
le copolymère tribloc a une masse moléculaire moyenne en poids comprise entre 10 000 et 400 000 où la masse moléculaire moyenne en poids est mesurée par le procédé défini dans la description.

4. Procédé de préparation d'un copolymère tribloc consistant à soumettre un monomère de lactide à une polymérisation par ouverture de cycle en présence d'un initiateur de poly(3-hydroxypropionate) ayant des groupes hydroxy aux deux extrémités, représenté par la Formule chimique 2 ci-après, pour préparer un copolymère tribloc. 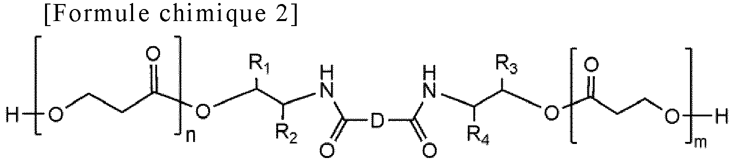 dans la Formule chimique 2,
D, R₁ à R₄, n et m sont identiques à ceux définis selon la revendication 1.

5. Procédé de préparation d'un copolymère tribloc selon la revendication 4, dans lequel
l'initiateur de poly(3-hydroxypropionate) ayant des groupes hydroxy aux deux extrémités a une masse moléculaire moyenne en poids comprise entre 5 000 et 50 000 où la masse moléculaire moyenne en poids est mesurée par le procédé défini dans la description.

6. Procédé de préparation d'un copolymère tribloc selon la revendication 4, dans lequel
la teneur en initiateur de poly(3-hydroxypropionate) ayant des groupes hydroxy aux deux extrémités est comprise entre 0,01 et 100 parties en poids sur la base de 100 parties en poids du monomère de lactide.

7. Procédé de préparation d'un copolymère tribloc selon la revendication 4, consistant en outre à :
soumettre le 3-hydroxypropionate à une polymérisation par condensation pour préparer un oligomère de poly(3-hydroxypropionate) ; et
faire réagir l'oligomère de poly(3-hydroxypropionate) ; un ou plusieurs éléments sélectionnés dans le groupe constitué de composés à base de bisoxazoline et de composés à base de diol pour préparer un initiateur de poly(3-hydroxypropionate) ayant des groupes hydroxy aux deux extrémités.

8. Procédé de préparation d'un copolymère tribloc selon la revendication 7, dans lequel
le composé à base de bisoxazoline est représenté par la Formule chimique 3 ci-après. 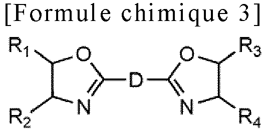 dans la Formule chimique 3,
D, R₁ à R₄, n et m sont identiques à ceux définis selon la revendication 1.

9. Procédé de préparation d'un copolymère tribloc selon la revendication 4, dans lequel
la polymérisation par ouverture de cycle est effectuée en présence d'un ou plusieurs catalyseurs sélectionnés dans le groupe constitué d'un catalyseur complexe organométallique et d'un catalyseur organique.

10. Procédé de préparation d'un copolymère tribloc selon la revendication 9, dans lequel
le catalyseur complexe organométallique est un catalyseur représenté par la Formule chimique 4 ci-après.
[Formule chimique 4] MA¹ₚA²₂₋ₚ
dans la Formule chimique 4, M est Al, Mg, Zn, Ca, Sn, Fe, Y, Sm, Lu, Ti ou Zr, p est un nombre entier de 0 à 2, A¹ et A² sont chacun indépendamment un groupe alkoxy ou carboxyle.

11. Procédé de préparation d'un copolymère tribloc selon la revendication 10, dans lequel
le MA¹ₚA²₂₋ₚ est un 2-éthylhexanoate d'étain (II) (Sn(Oct)₂).

12. Procédé de préparation d'un copolymère tribloc selon la revendication 9, dans lequel
la teneur en catalyseur est comprise entre 0,01 et 10 % en moles sur la base de 100 % en moles du monomère de lactide.

13. Procédé de préparation d'un copolymère tribloc selon la revendication 4, dans lequel
la polymérisation par ouverture de cycle est effectuée entre 150 et 200°C pendant 5 à 10 heures.

14. Procédé de préparation d'un copolymère tribloc selon la revendication 4, dans lequel
la réaction de polymérisation par ouverture de cycle est effectuée par polymérisation en masse.
